(19) **Europäisches Patentamt / European Patent Office / Office européen des brevets**

(11) **EP 3 748 934 B1**

(12) **EUROPEAN PATENT SPECIFICATION**

(45) Date of publication and mention
of the grant of the patent:
**12.07.2023 Bulletin 2023/28**

(21) Application number: **19743986.2**

(22) Date of filing: **29.01.2019**

(51) International Patent Classification (IPC):
*H04L 67/1087* (2022.01)   *H04L 67/1029* (2022.01)
*H04L 61/256* (2022.01)   *H04L 67/00* (2022.01)
*H04L 67/563* (2022.01)   *H04L 67/289* (2022.01)
*G06F 9/50* (2006.01)   *G06F 9/4401* (2018.01)
*G06F 8/61* (2018.01)   *G06F 8/60* (2018.01)
*H04L 61/2514* (2022.01)

(52) Cooperative Patent Classification (CPC):
**H04L 67/1029; G06F 8/63; G06F 9/5083;
H04L 61/2571; H04L 67/1091; H04L 67/289;
H04L 67/34; H04L 67/563;** H04L 61/2514;
H04L 67/1021; H04L 67/1095; H04L 67/61;
H04L 67/63

(86) International application number:
**PCT/CN2019/073581**

(87) International publication number:
**WO 2019/144965 (01.08.2019 Gazette 2019/31)**

(54) **MIRROR PULL METHOD AND SYSTEM THEREFOR**

SPIEGELZIEHVERFAHREN UND SYSTEM DAFÜR

PROCÉDÉ D'EXTRACTION DE COPIE MIROIR ET SYSTÈME S'Y RAPPORTANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.01.2018 CN 201810082188**

(43) Date of publication of application:
**09.12.2020 Bulletin 2020/50**

(73) Proprietor: **ZTE Corporation
Shenzhen, Guangdong 518057 (CN)**

(72) Inventor: **LI, Xialong
Shenzhen, Guangdong 518057 (CN)**

(74) Representative: **WBH Wachenhausen
Patentanwälte PartG mbB
Müllerstraße 40
80469 München (DE)**

(56) References cited:
**CN-A- 105 260 229    CN-A- 105 740 048
CN-A- 106 790 660    CN-A- 107 247 793
CN-A- 107 256 178    US-A1- 2015 058 420**

• **NATHAN SENTHIL ET AL: "CoMICon: A
Co-Operative Management System for Docker
Container Images", 2017 IEEE INTERNATIONAL
CONFERENCE ON CLOUD ENGINEERING (IC2E),
IEEE, 4 April 2017 (2017-04-04), pages 116-126,
XP033095484, DOI: 10.1109/IC2E.2017.24
[retrieved on 2017-05-09]**

**Description**

**TECHNICAL FIELD**

The present invention relates to the field of containerized platforms, and in particular, to a method and system for image pulling.

**BACKGROUND**

Container virtualization technology has become a widely accepted way of sharing server resources. It can provide system administrators with great flexibility in the process of building operating system instances on demand. The containers are completely using the sandbox mechanism, and there will not be any interface between each other.
Docker is a container engine for open source applications. It also allows developers to package their applications and dependent packages into a portable container and then publish it to Linux machines. It can also be virtualized. The emergence of container technology makes distributed systems that were originally deployed based on virtual machine nodes also gradually carry out containerized operations. For example, Google's kubernetes, swarm, etc. have all implemented containerized deployment, and the use of container technology is increasingly widespread.
When running a containerized application, the usual practice is to pull a mirror image from a repository (Registry), for example, to download the image from a public repository "docker hub". For an internal system of an enterprise, because customized images are often used, from the perspective of security and efficiency, a private repository service will be used to distribute the image.
When deploying a larger container application cluster, hundreds of nodes are used (for example, a kubernetes cluster system claims to support 2000 nodes). The main time of the deployment process is spent in the distribution of the image. Therefore, when a container application cluster is deployed in a large number of nodes for the first time and when images are updated, a processing bottleneck of the registry of the private repository will be incurred. This includes the processing bottleneck of the server where the private repository locates, and the network bandwidth bottleneck of the server. In the case of limited network bandwidth and processing capacity, because the Registry faces a large number of concurrent operations, a queue will inevitably appear for waiting of image pulling, so that the efficiency is relatively slow.
At present, there is a technology that combines the Bit Torrent protocol to speed up the distribution of images. The main principle is to share the image of each node through the Bit Torrent protocol to achieve P2P acceleration. Due to the principle of P2P technology, this technology needs to divide and compress an image file, and transmit and accelerate in all the nodes in the cluster, which will consume the network bandwidth resources to a certain extent. In addition, because the image file needs to be divided, and the synchronization of each divided file needs to be maintained, the complexity of the system is also increased.
The document US2015/058420A1 discloses a method for broadcasting a piece of content in an IT network including a content server having the content to be broadcast, and a plurality of clients seeking to retrieve the content, method in which the content is served in client/server mode to at least one client in a format allowing the subsequent broadcasting of same in P2P mode.
The document CN105740048A provides an image management method, device and system, relates to the field of the computer technology, can reduce the transmission frequency of image data and improves the use ratio of a storage space so as to lower the expenditure of a docker system. The system comprises a warehouse server and N nodes connected with the warehouse server, wherein the store modules of the N nodes form a distributed storage system, and the image data of the images in the N nodes is shared in the distributed storage system; the first node is used for generating a first image, and the first image comprises first metadata and first image data; the first image data is stored in the distributed storage system; an upload request is sent to the warehouse server, wherein the upload request carries the first metadata, and the first node is any one node in the N nodes; and the warehouse server is used for receiving the upload request sent from the first node and storing the first metadata in the upload request.
The document "CoMICon: A Co-Operative Management System for Docker Container Images" present CoMICon, a system for co-operative management of Docker images among a set of nodes. The key features of CoMICon are: (1) it enables a co-operative registry among a set of nodes, (2) it can store or delete images partially in the form of layers, (3) it facilitates the transfer of image layers between registries, and (4) it enables distributed pull of an image while starting a container.

**SUMMARY**

In view of this, the object of the present invention is to provide a method and system for image pulling to improve the efficiency of image pulling.
In order to deal with the above technical problem, the technical schemes adopted by the present invention are as follows:

In accordance with an aspect of the present invention, there is provided a method for pulling a mirror image of containerized application from an image repository, which is applied to a server, including:

receiving at least one image pull request from a requesting client;

judging whether a current load state of the server is a high-load running state;

determining, in response to a judgment result being yes, a first client, wherein the first client is configured with an image corresponding to the image pull request;

sending a redirection pull image message to the requesting client, wherein the redirection pull image message is used for the requesting client to pull the image from the first client;

where the determining the first client includes:

judging whether an online client exists in the subnet where the requesting client locates, wherein the online client is configured with an image corresponding to the image pull request;

determining that the online client is the first client in response to a judgment result being yes;

determining the clients in other subnets that have the image corresponding to the image pull request in response to the judgment result being no, and selecting at least one of the clients closest to the server as the first client.

In a possible design, after receiving at least one image pull request from a requesting client, the method includes:

judging whether the number of the at least one image pull request exceeds a preset threshold; and

selecting one or more of the the at least one image pull request for priority processing according to a preset priority pulling principle in response to a judgment result being yes.

In a possible design, the selecting multiple image pull requests for priority processing according to a preset priority pulling principle includes:

determining a subnet to which the requesting client sending the image pull request belongs; and
selecting the image pull request in each different belonged subnet.

In a possible design, the selecting the image pull request in each different belonged subnet includes:

selecting at least one of the image pull requests in each different belonged subnet in response to the number of the belonged subnets being less than or equal to a preset threshold;
preferentially selecting an image pull request from the belonged subnets that have a larger number of online clients in response to the number of the belonged subnets being greater than the preset threshold.

In a possible design, before sending the redirection pull image message to the requesting client, the method includes:

judging whether a distance between the requesting client and the first client is greater than a predetermined value; and in response to being yes, waiting for the server to establish an image transmission.

In a possible design, the receiving at least one image pull request from a requesting client includes:
obtaining IP information of the requesting client to judge whether the network exit of the requesting client has been mapped by NAT, said judgement involves determining that the obtained IP information is a local IP address inconsistent with the source IP address of the pull request.

According to the present invention, there is further provided a system for pulling a mirror image of containerized application from an image repository, which is applied to a server, including: a memory, a processor, and a computer program stored on the memory and executable on the processor, wherein the computer program, when executed by the processor, performs the steps of the method provided by an embodiment of the present invention.

According to the present invention, there is further provided a computer-readable storage medium storing an image pulling program which, when executed by a processor, cause the processor to perform the steps of the method provided by an embodiment of the present invention.

The method and system for image pulling provided by the embodiments of the present invention utilize the network bandwidth of each subnet to realize sharing and transmission of images in each subnet. The transmission protocol used is simple, requiring only a point-to-point transmission protocol to solve the problem of the bottleneck of the network and processing capacity of the service of the private repository (Registry).The invention can also optimize the priority order of pushed images according to the network conditions of a specific cluster, and maximize the use of the switch network to accelerate the pulling of the cluster images.

## BRIEF DESCRIPTION OF DRAWINGS

The drawings are provided for a further understanding of the technical schemes of the present application, and constitute a part of the description. The drawings and the embodiments of the present application are used to explain the technical schemes of the present application, and not intended to limit the technical schemes of the present application.

FIG. 1 is a schematic flow chart of a method for image pulling applied to a server according to an embodiment of the present invention;

FIG. 2 is a schematic flowchart of a method for image pulling applied to a server according to another embodiment of the present invention;

FIG. 3 is a schematic flow chart of a method for image pulling applied to a server according to another embodiment of the present invention; and

FIG. 4 is a schematic flowchart of a system for image pulling according to an embodiment of the present invention.

The implementation, functional characteristics and advantages of the present invention will be further described in conjunction with the embodiments and with reference to the drawings.

## DETAILED DESCRIPTION

In order to make the technical problems to be solved, technical schemes and beneficial effects of the present invention clearer, the present invention will be described below in further detail with reference to the accompanying drawings and embodiments. It should be understood that the specific embodiments described herein are only used to explain the present invention, and are not intended to limit the present invention.

In the present invention, both the server and the client provide repository services, so that container engines (such as Docker) can pull images from the repository of the server or the local client. The client itself is also an image, which needs to be pulled from the server first and run the client container.

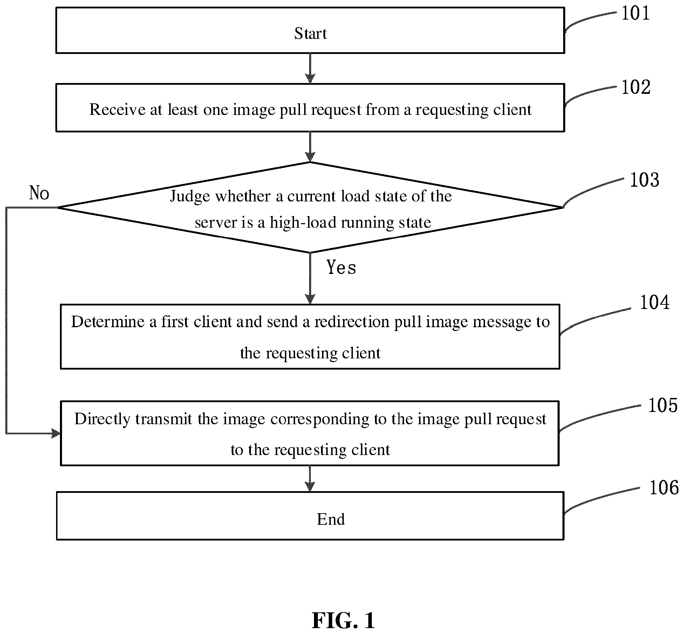

As shown in FIG. 1, in an embodiment of the present invention, a method for image pulling is provided, which is applied to a server and includes the following steps:

At 101, starting.

After a client runs, it will connect to the server (which can be understood as a login operation) and send basic information of a local node, such as local IP. If the connection is successful, a heartbeat connection is maintained between them. Similar to the heartbeat mechanism of the client and the server of communication software, it only takes up a small amount of resources. As long as the heartbeat continues, the server considers these clients to be online and to be online clients.

At 102, receiving at least one image pull request from a requesting client.

When an online client sends an image pull request, it is a requesting client.

At 103, judging whether a current load state of the server is a high-load running state, and if yes, going to step 104; if no, going to step 105.

At 104, determining a first client and sending a redirection pull image message to the requesting client.

The first client is configured with an image corresponding to the image pull request. The redirection pull image message is used for the requesting client to pull the image from the first client.

At 105, directly transmitting the image corresponding to the image pull request to the requesting client.

At this time, if the server is in a high-load running state, queuing is performed.

At 106, ending.

In this embodiment, after the server completes a push task, it will record which images the client currently stores, and maintain synchronization through a regular synchronization mechanism. When a new image pull request arrives, if the server is in a high load stage, it will search for the client which has the image among the current online clients, and send a message to the requesting client letting the requesting client to pull the image from the first client having the image.

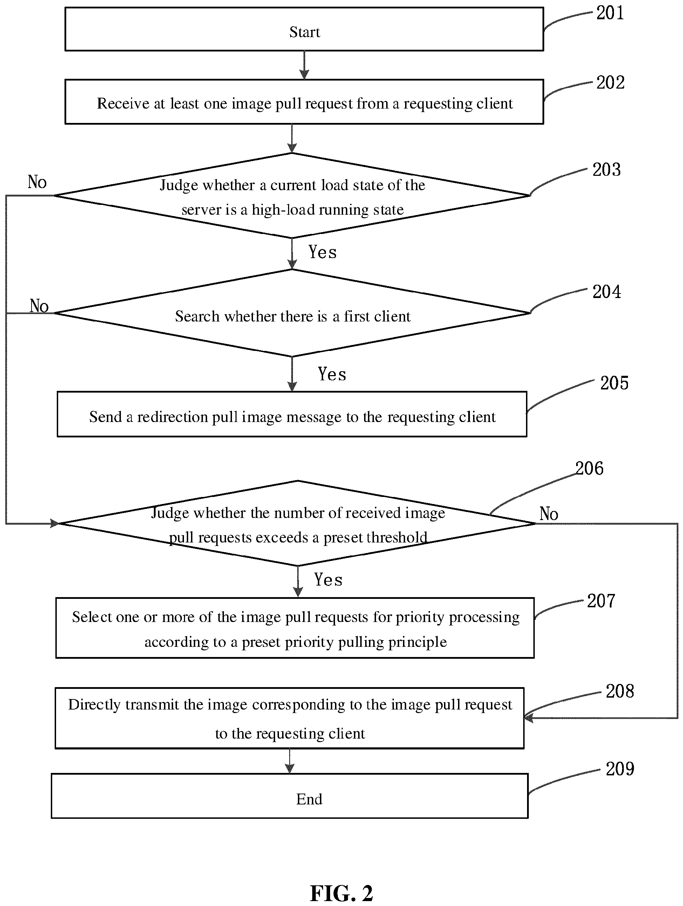

As shown in FIG. 2, in an embodiment of the present invention, a method for image pulling is provided, which is applied to a server and includes the following steps:

At 201, starting.

After a client runs, it will connect to the server (which can be understood as a login operation) and send basic information of the local node, such as local IP. If the connection is successful, a heartbeat connection is maintained between them. Similar to the heartbeat mechanism of the client and the server of communication software, it only takes up a small amount of resources. As long as the heartbeat continues, the server considers these clients to be online and to be online clients.

At 202, receiving at least one image pull request from a requesting client.

When an online client sends an image pull request, it is the requesting client.

At 203, judging whether a current load state of the server is a high-load running state, and if yes, going to step 204; if no, going to step 206.

At 204. Searching whether there is a first client which is configured with an image corresponding to the image pull request; if yes, going to step 205; if no, going to step 206.

At 205, sending a redirection pull image message to the requesting client, so that the requesting client can pull the image from the first client.

At 206, judging whether the number of received image pull requests exceeds a preset threshold; if yes, going to step 207; if no, going to step 208.

At 207, selecting one or more of the image pull requests for priority processing according to a preset priority pulling principle.

The preset priority pulling principle gives priority to covering all subnets. In this embodiment, the server maintains a table of client network information based on the client IP information that has been acquired, and classifies the node where the client locates according to the subnet and a routing path.

At 208, directly transmitting the image corresponding to the image pull request to the requesting client.

At 209, ending.

In this embodiment, when the server faces a large number of concurrent image pulling operations, the preset priority pulling principle is used to adjust a sending weight, and the request that needs to be processed preferentially is selected. For the remaining requests, if the server is in a heavy load period, it will ask whether the online client has the same image. If so, the server will send a resource redirection message to the requesting client to let the client to pull the image from another node where the image exists. The server will preferentially provide hosts that are on the same subnet as or close to the client that requests the image, usually a list of hosts, for the client to try to connect for multiple times.

In this way, due to the full use of the switch network bandwidth of each subnet, on the one hand, the pressure on the main repository can be greatly reduced, and on the one hand, the distribution speed of the image is accelerated. Theoretically, it can be seen that the speed of image distribution can be doubled over time, and the traffic of image file transmission will gradually be controlled in the switch network of the subnet.

Based on the embodiment corresponding to FIG. 2, in an embodiment of the present invention, a method for image pulling is provided. The selecting multiple image pull requests for priority processing according to a preset priority pulling principle includes:

Determining a subnet to which the requesting client sending the image pull request belongs; and

Selecting the image pull request in different belonged subnets.

For example, there are 300 nodes in a government-enterprise network, and a large container application cluster needs to be deployed, and there is a need for subsequent updates and patches. For container application clusters, deploying, updating, and patching means replacing the boot image.

When adopting the method for accelerating the large-scale image pulling provided by the present invention, a main repository server is required first, and the server provides a private repository service for all nodes to pull the corresponding client image for the first time and run it.

The client image itself also provides repository services. When all 300 nodes run the client image, the client will send network information of the node to the server, including the network card IP address, mask and gateway for external communication. And the clients maintain a heartbeat connection with the server, as long as the heartbeat continues, the server considers these clients to be online. After the server receives the information from the client, it will maintain the information of the client, and group the client according to the subnet, based on the client's IP address source, combined with the server's routing path to each client. It is assumed here that these 300 nodes belong to 3 subnets: Subnet A, Subnet B, and Subnet C.

After the 300 nodes have all run the client, in order to deploy or connect with a new application cluster, an operation and maintenance tool can be used to perform a batch of image pulling operations on the 300 nodes. Each node will first access the local client's repository service. If the local repository has the image, the image will be pulled directly. If not, a request to pull the image is made to the server. In the case of the first deployment, each node does not have the image. At this time, the client needs to pull the image from the server. For the server, in a time period, there may be a plurality of requests to pull the image, and then the server will select a plurality of image pull requests according to a preset priority pulling principle request to preferentially process the requests of each node.

In this embodiment, the preset priority pulling principle includes: determining the priority principle of different subnets according to the number of the subnets. Assuming that there are requests from nodes x1, x2, and x3 at the same time, and after considering the current bandwidth usage and efficiency, the server can only handle 2 requests first. According to the information of x1, x2 and x3, it is known that x1 and x2 belong to the same subnet A, then the server will first satisfy the pull request of x1 and x3 or x2 and x3, that is, the request from the nodes of different subnets, trying to cover all subnets first.

During specific implementation, the selecting image pull requests in different subnets includes:

If the number of the belonged subnets is less than or equal to the preset threshold, selecting at least one of the image pull requests in each different belonged subnet;

If the number of the belonged subnets is greater than the preset threshold, an image pull request is preferentially selected from the belonged subnets that have a larger number of online clients. In general, if the threshold is n, an image pull request is preferentially selected from each of the n subnets that have a larger number of online clients.

That is, in this embodiment, the preset priority pulling principle further includes a principle of large subnet priority determined according to the number of online clients owned by the subnet. At this time, if the nodes x1, x2, and x3 belong to three different subnets A, B, and C, but according to the current subnet information of the clients, it is known that 100 clients of the subnet where x1 locates remain online, and the subnet where x2 locates has 80 online clients, and the subnet where x3 is locates has 60 online clients. Then, according to the principle of large subnet priority, requests from x1 and x2 are preferentially satisfied.

More specifically, it is assumed that the government-enterprise network is composed of three subnets, subnet A, subnet B, and subnet C. There is no NAT mapping. The relationship between its nodes, that is the client IPs, and subnets is as follows:

Subnet A: 10.113.4.2 - 10.113.4.241, a total of 240 nodes are online and connected to the server

Subnet B: 10.113.3.2 - 10.113.3.201, a total of 200 nodes are online

Subnet C: 10.115.2.2 ~ 10.115.2.101, a total of 100 nodes are online

Using operation and maintenance tools, these nodes may send image pull requests to the server at the same time or within a certain period of time. According to the principle of different subnet priority and the principle of large subnet priority, if, within a short period of time (assumed to be within 3 seconds), 3 subnets each have 2 requests (6 requests in total) arriving at the server in succession, the server (assuming that the server can only satisfy n concurrent requests at a time) will first satisfy a request of subnet A (assuming the request from 10.113.4.2 is satisfied), subnet B (assuming the request from 10.113.3.2 is satisfied) and subnet C (assuming the request from 10.115.2.2 is satisfied) respectively (the principle of diffident subnet priority, that is, the connection capacity should cover as many different subnets as possible).

For example, assuming that n is 4, at this time, since the number of subnets is 3, which is less than n, the server will first satisfy a request from the node of subnet A, a request from the node of subnet B, and a request from the node of subnet C, respectively. The remaining connection capacity will be given to subnet A. This is based on the principle of large subnet. Due to the large number of online clients on subnet A, the remaining connections are temporarily queued. In other words, two requests from subnet A will be processed first, and one request from each of subnets B and C will be processed first, that is, at least one request for each subnet will be selected.

If the conditions of multiple requests meet the above requirements, for example, there are the same number of online clients in subnets A, B and C, then at this time, the remaining one connection capacity may be allocated according to the arrival time of the request, that is, the preset priority principle of pulling can also include: the time priority principle determined according to time sequence.

For another example, assuming that n is 2, at this time, since the number of subnets is 3, which is greater than n, a request from the node of subnet A and a request from the node of subnet B are first satisfied respectively. This is because subnet A and subnet B has more online clients than subnet C.

In the conditions of multiple requests meet the above requirements, for example, there are the same number of online clients in subnets A, B and C, then at this time, the two connection capacities may be allocated according to the arrival time of the request, that is, the preset priority principle of pulling can also include: the time priority principle determined according to time sequence.

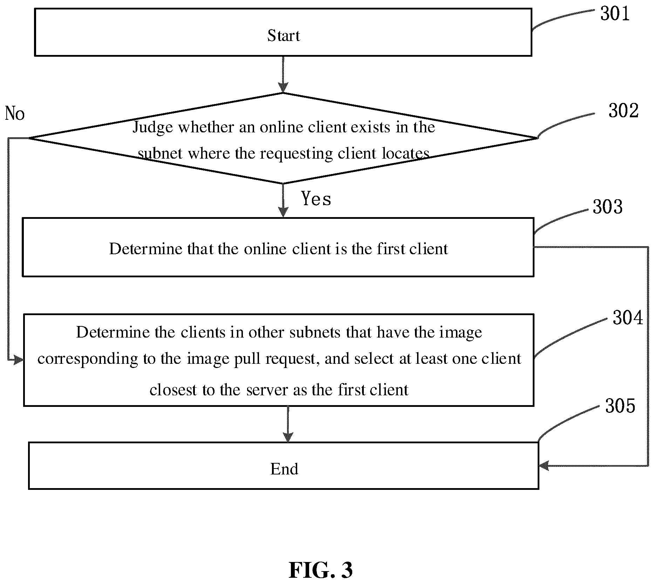

Based on any one of the foregoing embodiments, according to an embodiment of the present invention, there is provided a method for image pulling, as shown in FIG. 3, the determining the first client includes:

At 301, starting.

At 302, judging whether an online client exists in the subnet where the requesting client locates; if yes, going to step 303; if no, going to step 304.

The online client is configured with an image corresponding to the image pull request.

At 303, determining that the online client is the first client; and going to step 305.

At 304, determining the clients in other subnets that have the image corresponding to the image pull request, and selecting at least one client closest to the server as the first client;

At 305, ending.

It can be seen that in this embodiment, a node on the same subnet as the requesting node is preferentially searched to query whether the online client of the subnet also has the same image. If yes, a redirection pull image message is sent to the requesting client to let the requesting client to pull the image from the first client with the same image in its subnet. There may be multiple first clients.

For example, as mentioned earlier, if the nodes x1, x2, and x3 belong to three different subnets A, B, and C, after the first transmission, x1, x2, and x3 all have a certain image X, and now there is a new request for pulling the image X from x4, x5, and x6, where x4, x5 belong to subnet A, and x6 belongs to subnet C. Assuming that the server is only able to satisfy the request of x4 due to the heavy load at this time, and then for x5 and x6, by querying the client information, it is learned that x1 and x3 also have the image X, and a message is sent to x1 and x3 for confirmation, and because that x1 and x5 belong to subnet A, and x3 and x6 belong to subnet C, the server will send a redirection pull image message to x5 and x6 to let x5 pull the image X from x1 and x6 pull the image from x3, so that the traffic for x5 and x6 to pull the image is limited to subnets A and C. At the same time, using the switch network of the subnet, the speed has been greatly improved. When x5 and x6 have finished pulling the image, they will send feedback to the server to inform that they have finished pulling the image X.

The image pull requests from x4, x5, and x6 are the same as above, but the server queries out that the subnet A to which x5 belongs does not have the image X, but it is known by querying the online client that a node x7 of subnet B and a node x8 of the subnet C have the image X. Then at this time, the server preferentially selects the node of the subnet closer to the subnet A to which x5 belongs, and let x5 to redirect the pull request.

For example, if the routing path of the server to the node of subnet A is $r_1, r_2, r_3$, the routing path to subnet B is $r_1, r_2, r_4$, and the routing path to the node of subnet C is $r_1, r_2, r_5, r_6$, then it can be seen that subnet B and subnet A is more closer, especially in the case of government-enterprise network leased lines and network conditions, the routing path selection is basically determined. In this scenario, it can be considered that the number of routing hops for traffic transmission between the nodes of subnet B and subnet A is less than that between the nodes of the subnet C and subnet A. In this way, in the above scenario, the server will give priority to x5 to pull the image from the node x7 of subnet B.

A distance between the subnets can be determined by the following formula:

$$d(Sr_i, Sr_j) = card(Sr_i \cup Sr_j) - card(Sr_i \cap Sr_j) \quad (1)$$

Where, $Sr_i, Sr_j$ are an ordered set of routing paths of subnets i and j respectively. Taking the above case as an example, the set of routing paths from the server to subnet A is $\{r_1, r_2, r_3\}$ , and the set of routing paths from the server to subnet B is $\{r_1, r_2, r_4\}$, and the set of routing paths from the server to subnet C is $\{r_1, r_2, r_5, r_6\}$, then according to formula (1), the routing distance between subnets A and B is:

$$d(Sr_A, Sr_B) = card(Sr_A \cup Sr_B) - card(Sr_A \cap Sr_B)$$
$$= card(\{r_1, r_2, r_3, r_4\}) - card(\{r_1, r_2\})$$
$$= 4 - 2 = 2$$

The distance between subnets A and C is

$$d(\bar{Sr}_A, Sr_C) = card(Sr_A \cup Sr_C) - card(Sr_A \cap Sr_C)$$
$$= card(\{r_1, r_2, r_4, r_5, r_6\}) - card(\{r_1, r_2\})$$
$$= 5 - 2 = 3$$

Therefore, the distance between subnet B and subnet A is closer.

On the basis of any of the foregoing embodiments, before the sending the redirection pull image message to the requesting client, the method further includes:

Judging whether the distance between the requesting client and the first client is greater than a predetermined value;

If yes, waiting for the server to establish an image transmission.

Generally, if the requesting client and the first client belong to the same subnet, the distance between the two will definitely not be greater than the predetermined value. If they belong to different subnets, when the distance between the two is greater than the predetermined value, even if a node in the subnet has the image required by the requesting node, the server will consider that it is not suitable for file transmission between the two subnets because the efficiency is not high. At this time, the node needs to wait for the server to establish the image transmission.

The following is supplemented by examples to further illustrate this embodiment:
When all the first batch of requests are processed and there are more requests that exceed the concurrent processing capacity of the server, the server will perform a redirection pull request. Assuming that there is a node 10.113.4.5 from subnet A requesting an image pulling at this time, and the server does not have excess connection capabilities, then the server will try to analyze the existing online client through a client management analysis module. The server first inquires whether there is the image on the online client of the node in the same subnet (subnet A) as the node 10.113. 4.5. If it is found that the node 10.113.4.2 in subnet A also has the image corresponding to the request, a resource redirection message is sent to let the client of 10.113.4.5 request to pull the image from the client of the 10.113.4.2.

If the result of querying clients of subnet A is none, then the server turns to a neighboring subnet to query.

If the routing path of subnet A is:
={10.113.23.169, 10.114.51.121, 10.114.4.128}

The routing path of subnet B is:
={10.113.23.169, 10.114.51.121, 10.114.3.128}

The routing path of subnet C is:
={10.113.23.169, 10.114.51.121, 10.114.55.1, 10.114.5.128}

According to formula (1), it can be known that subnet B is closer to subnet A. Therefore, if no node with the image is found in subnet A, the server will search whether the client in the neighboring subnet B has the image. And so on, if there is none in subnet B, the server will turn to search for the nodes in subnet C.

When the distance between the neighboring subnet and the subnet where the requesting node locates is large, even if a node in the neighboring subnet has the image, this cross-subnet transmission will not improve the efficiency because the transmission crosses many routing points. Therefore, in this case, the server may not redirect the pull request, but will provide the image transmission.

Based on any one of the foregoing embodiments, the receiving an image pull request from a requesting client includes:
Obtaining IP information of the requesting client to judge whether a network exit of the requesting client has been mapped by NAT.

Considering that some subnet environments will do NAT mapping, so from the perspective of the server, the source IP of these clients are the same, but the ports are different, so this is why the client needs to send the client's local IP information to the server. In this case, as long as there are not many NAT mapping layers, the image distribution acceleration function can still be achieved.

For example, a host in a subnet uses C-type web addresses (IPs beginning with 192) for communication, and accesses hosts outside the subnet by NAT mapping through routing. The mapped values are all 10.116.53.22. Then, for the server, the source of the request IP it sees is 10.116.53.22, which is inconsistent with the IP information 192.xxx passed by the client, so it can be considered that the network exit of the client is mapped by NAT. At this time, the processing method of the server is the same as before. If a client with a local IP of 192.168.2.2 and a source IP of 10.116.53.22 requests to pull the image X, the server searches and finds that an online client under the same routing path with a source IP of 10.116 .53.22 and a local IP of 192.168.2.3 also has the image X, then the server will send a

"redirection pull image message" to 192.168.2.2, and let it pull the image X from 192.168.2.3. By repeating the above steps, the bandwidth of the local network within each subnet is utilized to the greatest extent, which greatly accelerates the speed of image distribution of the entire cluster node.

More specifically, if there is now a subnet D, as follows

Subnet D: 60 nodes from 192.168.2.2 to 192.168.2.61 are online
Subnet D uses Class C addresses internally and performs NAT mapping to the outside. Assume that the subnet D routing path is:
={10.113.23.169, 10.114.51.121, 10.114.6.128}

From the perspective of the server, the IPs of the nodes in subnet D are all 10.114.6.128, but because the client will also provide local IP information, the information seen by the server is as follows:

Client 1: Source IP: 10.114.51.121, Reported IP: 192.168.2.2

Client 2: Source IP: 10.114.51.121, Reported IP: 192.168.2.3

Client 3: Source IP: 10.114.51.121, Reported IP: 192.168.2.4

Client 60: Source IP: 10.114.51.121, Reported IP: 192.168.2.61

In this scenario, if the node of 192.168.2.5 of subnet D requests to download an image, since its IP is displayed as 10.114.51.121 and the routing path is { 10.113.23.169, 10.114.51.121, 10.114.6.128}, the server will query the client of subnet D for the existence of the image. If it is found that the node of 192.168.2.2 has the image, then the server will let the node of 192.168.2.5 pull the image from 192.168.2.2, so as to achieve the purpose of network acceleration by using the switch network.

After the image transmission is completed, the server will also check the integrity of the image. At the same time, if the client tries to pull the image from another client and fails, a feedback will be given to the server, and the server will redirect to other clients to download or the server itself provides image transmission.

According to the present invention, there is further provided a system for image pulling, which is applied to a server and includes: a memory, a processor, and a computer program stored on the memory and executable on the processor, wherein the computer program, when executed by the processor, performs the steps of the method for image pulling provided by any embodiment of the present invention.

It should be noted that the above system embodiment of image pulling and the method embodiment belong to the same concept, and the specific implementation process is described in detail in the method embodiments, and the technical features in the method embodiments are correspondingly applicable in the system embodiments of image pulling, which will not be repeated here.

In addition, according to an embodiment of the present invention, there is further provided a computer-readable storage medium storing an image pulling program, which, when executed by a processor, cause the processor to perform the steps of the method for the image pulling provided by the embodiment of the present invention.

It should be noted that the above-described image pull program embodiment on the computer-readable storage medium and the method embodiment belong to the same concept, and the specific implementation process is described in detail in the method embodiments, and the technical features in the method embodiments are correspondingly applicable in the embodiments of computer-readable storage medium, which will not be repeated here.

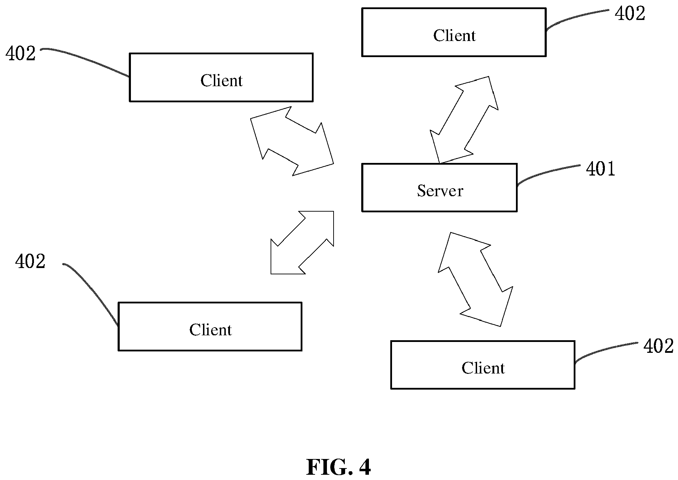

As shown in FIG. 4, according to the present invention, there is further provided a system for image pulling, including: a server 401 and at least one client 402. The server 401 is configured to send a redirection pull image message to the client or establish an image transmission with the client, according to the image pull request sent by the client. The redirection pull image message is used for the requesting client to pull the image from a first client. The client 402 is configured to pull the image from the server or to pull the image from the first client according to the redirection pull image message; wherein, the first client is configured with an image corresponding to the image pull request.

According to the present invention, there is provided a method and system for image pulling, especially for a cluster composed of multiple subnet nodes in a government-enterprise network. The invention makes full use of the switch network inside the subnet, does not occupy the bandwidth of the main road, greatly reduces the pressure on the server of the main repository, and avoids the congestion of the main road bandwidth.

The preferred embodiments of the present invention have been described above with reference to the accompanying drawings, which does not limit the scope of rights of the present invention. Those skilled in the art can make many variations to realize the present invention without deviating from the scope of the present invention. For example, the features of one embodiment can be used in another embodiment to obtain another embodiment. Any modification, equivalent replacement and improvement made within the technical concept of using the present invention shall fall within the scope of the rights of the present invention as defined by the appended claims.

**Claims**

1. A method for pulling a mirror image of containerized application from an image repository, which is applied to a server (401), comprising:

   receiving at least one image pull request from a requesting client (402);
   judging whether a current load state of the server (401) is a high-load running state;
   determining, in response to a judgment result being yes, a first client (402), wherein the first client (402) is configured with an image corresponding to the image pull request;
   sending a redirection pull image message to the requesting client (402), wherein the redirection pull image message is used for the requesting client (402) to pull the image from the first client (402);
   **characterized in that** the determining the first client (402) comprises:

   judging whether an online client (402) exists in the subnet where the requesting client (402) locates, wherein the online client (402) is configured with an image corresponding to the image pull request;
   determining that the online client (402) is the first client (402) in response to a judgment result being yes;
   determining the clients (402) in other subnets that have the image corresponding to the image pull request in response to the judgment result being no, and selecting at least one of the clients (402) closest to the server (401) as the first client (402).

2. The method according to claim 1, wherein after receiving at least one image pull request from a requesting client (402), the method comprises:

   judging whether the number of the at least one image pull request exceeds a preset threshold; and
   selecting one or more of the at least one image pull request for priority processing according to a preset priority pulling principle in response to a judgment result being yes.

3. The method according to claim 2, wherein the selecting multiple image pull requests for priority processing according to a preset priority pulling principle comprises:

   determining a subnet to which the requesting client (402) sending the image pull request belongs; and
   selecting the image pull request in each different belonged subnet.

4. The method according to claim 3, wherein the selecting the image pull request in each different belonged subnet comprises:

   selecting at least one of the image pull requests in each different belonged subnet in response to the number of the belonged subnets being less than or equal to a preset threshold;
   preferentially selecting an image pull request from the belonged subnets that have a larger number of online clients (402) in response to the number of the belonged subnets being greater than the preset threshold.

5. The method according to claim 1, wherein before sending the redirection pull image message to the requesting client (402), the method comprises:

   judging whether a distance between the requesting client (402) and the first client (402) is greater than a predetermined value; and
   in response to being yes, waiting for the server (401) to establish an image transmission.

6. The method according to claim 1, wherein the receiving at least one image pull request from a requesting client (402) comprises:
   obtaining IP information of the requesting client (402) to judge whether the network exit of the requesting client (402) has been mapped by NAT, said judgement involves determining that the obtained IP information is a local IP address inconsistent with the source IP address of the pull request.

7. A system for pulling a mirror image of containerized application from an image repository, which is applied to a server (401), comprising: a memory, a processor, and a computer program stored on the memory and executable on the processor, wherein the computer program, when executed by the processor, performs the steps of the method of any one of claims 1 to 6.

8. A computer-readable storage medium storing an image pulling program which, when executed by a processor, cause the processor to perform the steps of the method of any one of claims 1 to 6.

**Patentansprüche**

1. Verfahren zum Abrufen eines Spiegelabbilds einer containerisierten Anwendung aus einem Abbildspeicher, das auf einen Server (401) angewendet wird, umfassend:

    Empfangen mindestens einer Abbildabrufanforderung von einem anfordernden Client (402);
    Beurteilen, ob ein aktueller Lastzustand des Servers (401) ein Hochlastzustand ist;
    Bestimmen, als Reaktion auf ein Beurteilungsergebnis von "Ja", eines ersten Clients (402), wobei der erste Client (402) mit einem Abbild ausgelegt ist, das der Abbildabrufanforderung entspricht;
    Senden einer Abbildabrufumleitungsnachricht an den anfordernden Client (402), wobei die Abbildabrufumleitungsnachricht für den anfordernden Client (402) zum Abrufen des Abbilds vom ersten Client (402) verwendet wird;
    **dadurch gekennzeichnet, dass** das Bestimmen des ersten Clients (402) folgende Vorgänge umfasst:

        Beurteilen, ob ein Online-Client (402) im Teilnetz existiert, in dem sich der anfordernde Client (402) befindet, wobei der Online-Client (402) mit einem Abbild ausgelegt ist, das der Abbildabrufanforderung entspricht;
        Bestimmen, dass der Online-Client (402) der erste Client (402) ist, als Reaktion auf ein Beurteilungsergebnis von "Ja";
        Bestimmen der Clients (402) in anderen Teilnetzen, die über das der Abbildabrufanforderung entsprechende Abbild verfügen, als Reaktion auf das Beurteilungsergebnis von "Nein", und Auswählen mindestens eines der Clients (402), die dem Server (401) am nächsten sind, als den ersten Client (402).

2. Verfahren nach Anspruch 1, wobei das Verfahren nach dem Empfangen mindestens einer Abbildabrufanforderung von einem anfordernden Client (402) umfasst:

    Beurteilen, ob die Anzahl der mindestens einen Abbildabrufanforderung einen voreingestellten Schwellenwert überschreitet; und
    Auswählen einer oder mehrerer der mindestens einen Abbildabrufanforderung zur vorrangigen Verarbeitung gemäß einem voreingestellten Prioritätsabrufprinzip als Reaktion auf ein Beurteilungsergebnis von "Ja".

3. Verfahren nach Anspruch 2, wobei das Auswählen mehrerer Abbildabrufanforderungen zur vorrangigen Verarbeitung gemäß einem voreingestellten Prioritätsabrufprinzip umfasst:

    Bestimmen eines Teilnetzes, zu dem der anfordernde Client (402), der die Abbildabrufanforderung sendet, gehört; und
    Auswählen der Abbildabrufanforderung in jedem der verschiedenen zugehörigen Teilnetze.

4. Verfahren nach Anspruch 3, wobei das Auswählen der Abbildabrufanforderung in jedem der verschiedenen zugehörigen Teilnetze umfasst:

    Auswählen mindestens einer der Abbildabrufanforderungen in jedem der verschiedenen zugehörigen Teilnetze als Reaktion darauf, dass die Anzahl der zugehörigen Teilnetze kleiner oder gleich einem voreingestellten Schwellenwert ist;
    bevorzugtes Auswählen einer Abbildabrufanforderung aus den zugehörigen Teilnetzen, die eine größere Anzahl von Online-Clients (402) aufweisen, als Reaktion darauf, dass die Anzahl der zugehörigen Teilnetze größer als der voreingestellte Schwellenwert ist.

5. Verfahren nach Anspruch 1, wobei das Verfahren vor dem Senden der Abbildabrufumleitungsnachricht an den anfordernden Client (402) umfasst:

    Beurteilen, ob ein Abstand zwischen dem anfordernden Client (402) und dem ersten Client (402) größer als ein vorbestimmter Wert ist; und
    als Reaktion auf "Ja", Warten, dass der Server (401) eine Abbildübertragung einrichtet.

**6.** Verfahren nach Anspruch 1, wobei das Empfangen mindestens einer Abbildabrufanforderung von einem anfordernden Client (402) umfasst:
Erhalten von IP-Informationen des anfordernden Clients (402) zum Beurteilen, ob der Netzausgang des anfordernden Clients (402) durch NAT abgebildet ist, wobei die Beurteilung das Bestimmen beinhaltet, dass die erhaltenen IP-Informationen eine lokale IP-Adresse sind, die nicht mit der Quell-IP-Adresse der Abrufanforderung übereinstimmt.

**7.** System zum Abrufen eines Spiegelabbilds einer containerisierten Anwendung aus einem Abbildspeicher, das auf einen Server (401) angewendet wird, umfassend: einen Speicher, einen Prozessor und ein Computerprogramm, das im Speicher gespeichert ist und auf dem Prozessor ausführbar ist, wobei das Computerprogramm bei seiner Ausführung durch den Prozessor die Schritte des Verfahrens nach einem der Ansprüche 1 bis 6 durchführt.

**8.** Computerlesbares Speichermedium, auf dem ein Abbildabrufprogramm gespeichert ist, das bei seiner Ausführung durch einen Prozessor den Prozessor veranlasst, die Schritte des Verfahrens nach einem der Ansprüche 1 bis 6 durchzuführen.

**Revendications**

**1.** Procédé d'extraction d'une image miroir d'une application conteneurisée à partir d'un référentiel d'images, lequel est appliqué à un serveur (401), comprenant :

la réception d'au moins une demande d'extraction d'image à partir d'un client demandeur (402) ;
le jugement qu'un état de charge actuel du serveur (401) est ou non un état d'exécution à charge élevée ;
la détermination, quand un résultat de jugement est oui, d'un premier client (402), dans lequel le premier client (402) est configuré avec une image correspondant à la demande d'extraction d'image ;
l'envoi d'un message d'extraction d'image de redirection au client demandeur (402), dans lequel le message d'image d'extraction de redirection est utilisé par le client demandeur (402) pour extraire l'image à partir du premier client (402) ;
**caractérisé en ce que** la détermination du premier client (402) comprend :

le jugement qu'un client en ligne (402) existe ou non dans le sous-réseau où se trouve le client demandeur (402), dans lequel le client en ligne (402) est configuré avec une image correspondant à la demande d'extraction d'image ;
la détermination que le client en ligne (402) est le premier client (402) quand un résultat de jugement est oui ;
la détermination des clients (402) dans d'autres sous-réseaux qui ont l'image correspondant à la demande d'extraction d'image quand le résultat de jugement est non, et la sélection d'au moins un des clients (402) le plus proche du serveur (401) comme premier client (402).

**2.** Procédé selon la revendication 1, le procédé comprenant, après la réception d'au moins une demande d'extraction d'image à partir d'un client demandeur (402) :

le jugement que le nombre de l'au moins une demande d'extraction d'image dépasse ou non un seuil prédéfini ; et
la sélection d'une ou plusieurs de l'au moins une demande d'extraction d'image pour un traitement prioritaire selon un principe d'extraction de priorité prédéfini quand un résultat de jugement est oui.

**3.** Procédé selon la revendication 2, dans lequel la sélection de multiples demandes d'extraction d'image pour un traitement prioritaire selon un principe d'extraction de priorité prédéfini comprend :

la détermination d'un sous-réseau auquel appartient le client demandeur (402) qui envoie la demande d'extraction d'image ; et
la sélection de la demande d'extraction d'image dans chaque sous-réseau d'appartenance différent.

**4.** Procédé selon la revendication 3, dans lequel la sélection de la demande d'extraction d'image dans chaque sous-réseau d'appartenance différent comprend :

la sélection d'au moins une des demandes d'extraction d'image dans chaque sous-réseau d'appartenance différent quand le nombre de sous-réseaux d'appartenance est inférieur ou égal à un seuil prédéfini ;

la sélection préférentielle d'une demande d'extraction d'image à partir des sous-réseaux d'appartenance qui ont un plus grand nombre de clients en ligne (402) quand le nombre de sous-réseaux d'appartenance est supérieur au seuil prédéfini.

5. Procédé selon la revendication 1, le procédé comprenant, avant l'envoi du message d'image de redirection au client demandeur (402) :

le jugement qu'une distance entre le client demandeur (402) et le premier client (402) est supérieure ou non à une valeur prédéterminée ; et
quand le jugement est oui, l'attente que le serveur (401) établisse une transmission d'image.

6. Procédé selon la revendication 1, dans lequel la réception d'au moins une demande d'extraction d'image à partir d'un client demandeur (402) comprend :
l'obtention d'informations IP du client demandeur (402) pour juger que la sortie du réseau du client demandeur (402) a été mappée par NAT, ledit jugement impliquant de déterminer que les informations IP obtenues sont une adresse IP locale incohérente avec l'adresse IP source de la demande d'extraction.

7. Système d'extraction d'une image miroir d'une application conteneurisée à partir d'un référentiel d'images, lequel est appliqué à un serveur (401), comprenant : une mémoire, un processeur et un programme d'ordinateur stocké sur la mémoire et exécutable sur le processeur, dans lequel le programme d'ordinateur, à son exécution par le processeur, réalise les étapes du procédé selon l'une quelconque des revendications 1 à 6.

8. Support de stockage lisible par ordinateur stockant un programme d'extraction d'image qui, à son exécution par un processeur, amène le processeur à réaliser les étapes du procédé selon l'une quelconque des revendications 1 6.

Start — 101

Receive at least one image pull request from a requesting client — 102

No

Judge whether a current load state of the server is a high-load running state — 103

Yes

Determine a first client and send a redirection pull image message to the requesting client — 104

Directly transmit the image corresponding to the image pull request to the requesting client — 105

End — 106

**FIG. 1**

```
                                               ┌─ 201
┌────────────────────────────────────────────┐
│                   Start                     │
└────────────────────────────────────────────┘
                     │
                     ▼                         ┌─ 202
┌────────────────────────────────────────────┐
│ Receive at least one image pull request from a requesting client │
└────────────────────────────────────────────┘
                     │
                     ▼                         ┌─ 203
  No      ◇ Judge whether a current load state of the ◇
          ◇    server is a high-load running state    ◇
                     │ Yes
                     ▼                         ┌─ 204
  No      ◇ Search whether there is a first client ◇
                     │ Yes
                     ▼                         ┌─ 205
┌────────────────────────────────────────────┐
│ Send a redirection pull image message to the requesting client │
└────────────────────────────────────────────┘

                                               ┌─ 206
          ◇ Judge whether the number of received image ◇  No
          ◇   pull requests exceeds a preset threshold  ◇
                     │ Yes
                     ▼                         ┌─ 207
┌────────────────────────────────────────────┐
│ Select one or more of the image pull requests for priority processing │
│          according to a preset priority pulling principle              │
└────────────────────────────────────────────┘

                                               ┌─ 208
┌────────────────────────────────────────────┐
│ Directly transmit the image corresponding to the image pull request │
│                to the requesting client                             │
└────────────────────────────────────────────┘
                     │
                     ▼                         ┌─ 209
┌────────────────────────────────────────────┐
│                    End                      │
└────────────────────────────────────────────┘
```

## FIG. 2

Start ——— 301

No

Judge whether an online client exists in the subnet where the requesting client locates ——— 302

Yes

Determine that the online client is the first client ——— 303

Determine the clients in other subnets that have the image corresponding to the image pull request, and select at least one client closest to the server as the first client ——— 304

——— 305

End

**FIG. 3**

**FIG. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015058420 A1
- CN 105740048 A